# EUROPEAN PATENT APPLICATION

(11) **EP 2 690 592 A1**
(43) Date of publication of application: **29.01.2014**
(21) Application number: 13176460.7
(22) Date of filing: 15.07.2013
(51) Int. Cl.: G06Q 30/06

(54) **Online purchase of items based on live offers**

(30) Priority: 24.07.2012 US 201213557123
(71) Applicant: Gface GmbH, 60322 Frankfurt/Main (DE)
(72) Inventor: Yerli, Cevat, 60314 Frankfurt/Main (DE)
(74) Representative: Schmidt, Steffen

(57) **Abstract**

A method for enabling purchase of items within an online system is described, comprising the steps of providing an element representing an offer of one or more items, the element specifying a price of one of the items and a time period for purchase of the items; automatically presenting the element by the online system to a plurality of users, such that each user is enabled to interact with the element and purchase at least one of the items during the time period; and adjusting the price of the item as a function of the remaining time for purchase and an interaction of at least one of the users with the element. Furthermore, a corresponding online system enabling purchase of items and a data structure are defined.

## Description

### TECHNICAL FIELD

The present disclosure relates to purchase of items within online systems.

### BACKGROUND

State of the art techniques for online purchase of items, such as online shops, typically offer a huge variety of items for sale. A customer may access the online shop via a network, such as the Internet, and may search and purchase an item for a predetermined fixed price. However, this price remains the same for all customers even if the dealer decides to modify the price. In particular, a modification takes place offline and irrespective of a group of current online customers being interested in the respective item. Hence, online shops do not allow for a dynamic adjustment of prices based on behavior of current customers.

In other online systems, such as auction platforms, the current price for an item is directly dependent on the highest bid of a participant of the auction. However, only the participant placing the highest bid will receive the item after the auction is finished.

Other state of the art systems are known that consider a social network standing of a customer in order to determine a fixed price for that customer.

### SUMMARY

A method for enabling purchase of items within an online system and an online system enabling purchase of items for users of the online system are described. Furthermore, a computer-readable medium and a data structure are also described.

Described embodiments involve purchase of items directed at a group of online customers, which are independently and collaboratively purchasing items. Described embodiments allow for price adjustments over a period of time based on behavior of involved customers. Described embodiments enable dynamic and collaborative purchase of items within online systems by groups of interested customers.

For example, a method for enabling purchase of items within an online system according to the present disclosure comprises the steps of providing an element representing an offer of one or more items, the element specifying a price of one of the items and a time period for purchase of the items, and automatically presenting the element by the online system to a plurality of users, such that each user is enabled to interact with the element and purchase one of the items during the time period. The price of the item is adjusted as a function of a remaining time for purchase and an interaction of at least one of the users with the element.

The method enables each user of the online system or a group of users to individually decide about a purchase of items, such as real or virtual goods, yet the price of an item will be automatically adjusted in response to group behavior of the users interacting with the element. For example, the online system, a dedicated component of the online system, or a third-party engine may automatically adjust the price per item. The online system may detect each interaction, filter the interactions, and provide the data used to adjust the price. Therefore, users may motivate other users to interact with the element, e.g., to buy or purchase an item, in order to influence the current or a final selling price. Hence, users of an online system may, in real time, purchase items that are linked to discounts or special offers, which are managed by the online system.

The method furthermore enables a dealer, who may also be a user of the online system, to create an offer via an interface of the online system by specifying the items for sale, an initial price, and a time period during which the items may be purchased. A dealer may access the online system via the interface to define the element which, thereafter, may be created by the online system and automatically presented to respective users or user groups. Later on, the dealer may access the element, for example, via a management interface in order to monitor and modify parameters of the offer, such as a remaining time of the offer, remaining items, current price, next price drop, and other parameters. Since the parameters of the offer may be updated in real time, the dealer may directly react to the current group of involved users and may optimize the parameters of the offer towards the interested users.

In addition, the creator of the element may specify how the live offer will behave in response to interactions of users with the element. For example, the creator may define parameters of the function for adjustment of the price, such as by specifying a fixed price valid during a limited time period, or by specifying when the initial or a current price will decrease based on an amount of purchasers, elapsed time, or a combination of both. Also, the creator may specify weighting factors of the parameters of the function. Hence, the price adjustment function may accept several inputs, including the remaining time and interactions of users, and each input may be weighted differently. For example, the weighting factors of two inputs may be set to 0.5, such that both inputs will be equally considered for computation of the current price. Also, the weighting factor for the remaining time or the weighted factor for the interactions of users may be set to 0, such that the respective input will have no influence on the adjustment of the price. By setting the weighting factor of the interactions of users to 0, the dealer is enabled to specify a fixed price for a limited period of time or may define an iterative decrease of the price after each elapsed time lag. Similarly, by setting the weighting factor for the remaining time to 0, the dealer may specify an offer in which the price only depends on interactions with the element, such as buying an item by a user.

The inventive method allows for both a flexible processing and management of live offers and a collaborative and dynamic purchase of items within online systems.

In one embodiment, the method further comprises initiating a collaborative activity between at least some of the users within the online system, said activity being linked to the element and enabling the users to directly interact with the element. The activity may comprise any interaction between two or more users of the online system, such as a chat or video chat. For example, the element representing the offer may be presented to a group of users, which may thereafter be connected to the offer. The online system may initiate a chat and the connected users may be invited to join the chat. For example, the chat may be set up to involve all users connected to the offer. Likewise, for a particular user the chat may be restricted to a group of other users based on an affiliation of the user with the other users. Hence, the user may, for example, join the chat session only with users connected to him, such as his friends or colleagues, or with specific users. In addition, the online system or the particular user may specify other options for selection of chat partners. A text or video chat may be a preferred collaborative activity between users. Yet, other dedicated activities, such as messaging or conferencing applications, message feeds, data streams, and others, may be initiated by the online system or by a connected user, involving a group of specific users either defined by the online system or the user.

According to one embodiment, the element is dynamically updated by the online system in real time based on interactions with the element by at least one of the users. Therefore, any change in the data related to an offer may be automatically presented to all viewers or users connected to the element representing the offer. The data may include at least one of a value indicative of a number of users that have bought an item, a value indicative of a number of users that viewed the element representing the offer, a value indicative of a number of users that forwarded or recommended the offer, a value indicative of a number of users that pressed an interactive element provided by the online system related to a preference of the user for that offer (such as an "I like it" button), a value indicative of a number of users that communicate about the offer with other users (for example, by attaching the element representing the offer to a conversation, a chat, or a video talk, or any other suitable activity), a value indicative of a number of users that have interacted with the element in a different way within the online system, or any other suitable value or parameter.

According to another embodiment, the element further specifies a point in time after which the items may be purchased during the specified time period. A dealer or creator of an offer may place the offer within the online system on a specific time or moment, for example, immediately after creation, or at some point in time in the future. Hence, the dealer may advertise the offer even before the items may be purchased and the users can get ready before the offer starts, for example, by posting future messages about future events to the users or by utilizing time-based advertisement of messages, such as future advertisements or offers.

In yet another embodiment, the method further comprises providing tags to define a target group for the offered item and selecting the plurality of users based on the target group. The offer may be automatically targeted towards interested users, such as a target audience, for example by selectively displaying content related to the offered item or element to the users. Targeting may be managed by tags attached to the element. These tags direct the live offer towards users with the same or similar interests connected to the tags. The tags may be automatically generated by the online system, for example, by analyzing the item, or an item description, or interests related to the offer, which may be retrieved from the element and corresponding information provided by the dealer or creator of the offer. Also, the tags may be directly defined by the dealer. The dealer may access an interface provided by the online system to change the tags, interests, or item description at any time in order to increase a hit rate of positive matches between interested users and offered items. The system may in real time provide the dealer with feedback, for example, indicating how many users currently match the tags. Furthermore, tags can be connected to any location and time, for example geographical areas, such as zones or maps. For example, tags or other interest data may be associated with a geographical zone, wherein the geographical zone and/or the interest data may be defined or selected by a user or the dealer. Thereafter, the offer may be associated with the interest data and/or the geographical zone and provided to users of the target group. Hence, the method enables adaptation and changes of targeting in real time.

According to one embodiment, the method further comprises presenting, by one of the users, the element to one or more further users of the online system. In particular, users who like the offer can forward the element as a recommendation to other users, which may be connected to or otherwise affiliated with the user, for example, as friends. By enabling users to distribute an offer to other users of the online system, the method enables a simple and effective multiplication of targeting via users.

According to another aspect, the method further comprises providing feedback on the interaction of users with the element. The feedback may include any information about the offer and current interaction and performance of the offer and may be provided, for example, via the element. The online system may log any access to the element and data about the accessing user. Hence, the online system may match the interests of the accessing user and the offer and create an access profile. Furthermore, the online system may indicate the number and kind of interactions with the element, such as a number of sales, views, recommendations, and other indications and data related to the interactions with the element.

In another embodiment, the price of the item is further adjusted as a function of a number of users interacting with the element, wherein the users are connected to each other within the online system. An offer, such as a special offer related to a discount, can be linked to an amount of users that are directly connected to each other. The price may be decreased if the number of interacting users increases, which may, for example, be linked as friends of a certain user. Thus, the more users buy an item, the higher a discount for all of them may be. Hence, the method enables placement of special offers to users connected to each other within the online system. The online system may furthermore restrict such an offer to the group of connected users. If other users start to interact with the element, the online system may require the other users to connect with the interacting users. Also, the online system may create a separate element derived from the element representing the offer and the other users may be redirected to the separate element in order to purchase the items. The separate element may be directly coupled to the element and may inherit any information with regard to the items. However, the separate element may specify a different adjustment of the price. Also, the dealer or creator of the element may be notified about the access and may redefine parameters of the function for price adjustment.

According to another aspect, said interacting comprises purchasing at least one of the items by one of the users using the element and said adjusting includes decreasing the price after each purchase. Hence, the method enables a dynamic adjustment of the price based on purchase of the same item by connected or unconnected users of the online system.

In a further embodiment, said adjusting includes decreasing the price after a predetermined period of time. In particular, the price may decrease over time, until the time has elapsed and the offer is over.

According to one embodiment, the final selling price of a purchased item corresponds to the price valid at the time of purchase of the item or to the price valid at the end of the time period.

According to another aspect, the element further specifies the number of remaining items available for purchase and the method further comprises terminating the offer in response to the number of remaining items. For example, the price may decrease in response to users buying the item until the offer is over or all offered items are sold.

In one embodiment, the online system is a social network.

Furthermore, a computer-readable medium, according to the present disclosure, has instructions stored thereon, wherein said instructions, when installed and executed on a computing device, cause said computing device to automatically perform a method according to an embodiment of the present disclosure. The computing device may comprise a memory and a processor linked to the memory. The computing device may comprise means to access the medium and read the instructions from the medium. The instructions may be transferred to the memory of the computing device. In addition, the computing device may perform one or more installation steps in order to adapt the instructions to the particular computing device and to configure the computing device to execute the instructions. In particular, the computing device may already be configured to host an online system and the instructions may be installed as a module or component of the online system, such that the online system is configured to enable online purchase of items. Furthermore, the computing device may be coupled to one or more networks in order to enable access to the online system by a plurality of client devices being operated by users of the online system via at least one of the networks. In response to the instructions, the online system may be further configured to provide an element representing an offer of one or more items, the element specifying a price of one of the items and a time period for purchase of the items; to automatically present the element to a plurality of users, such that each user is enabled to interact with the element and purchase one of the items during the time period; and to adjust the price of the item as a function of a remaining time for purchase and an interaction of at least one of the users with the element. An online system enabling purchase of items, according to the present disclosure, comprises means for providing an element representing an offer of one or more items, the element being defined as a data structure specifying a price of one of the items and a time period for purchase of the items, and means for automatically presenting the element by the online system to a plurality of users, such that each user is enabled to interact with the element and purchase one of the items during the time period. The online system further includes an engine configured to adjust the price of the item as a function of a remaining time for purchase and an interaction of at least one of the users with the element.

The online system may provide input and output interfaces to enable users of the online system to access the online system. In particular, the online system may be hosted by one or more servers and the users may connect to the online system via a respective client device coupled to at least one of the servers via a network. Dealers, who may also be represented as users of the online system, can create one or more offers via respective management interfaces. Furthermore, dealers may create several similar offers by using managing tools provided by the online system. An offer may be automatically presented to a user via an output interface and the online system may enable interaction with the offer via an input interface. The input and output interfaces may be integrated within a single interface of the online system. In order to present the offer to a user, the online system may access the element and generate a representation of the element based on current data of the element. Subsequently, the online system may provide the representation to the user via the output interface and may, furthermore, combine the output interface with an input interface including interactive elements and other interaction means. The user may trigger the interactive elements or interaction means in order to initiate an action related to the offer. For example, the user may click on a button in order to buy an item of the presented offer.

Furthermore, the online system enables a plurality of users to access the element and interact with the offer, wherein the price may be dynamically adjusted in response to the number of users and the remaining time. During the specified time period for purchase, the engine for adjustment of the price may access the element concurrently or after each update of the element and may analyze the remaining time for purchase and any interaction of users with the element. The engine may access a function definition or parameters specified by the element and compute a current price for each item of the offer. Likewise, the element may include a functional element computing the current price and the engine may access the functional element in order to retrieve the current price or simply to trigger an update of the element. For example, the element may comprise a procedure that may access one or more member variables specifying the function definition and parameters, and may compute the current price after each invocation. The current price may be returned to the caller and/or may be stored in another member variable representing the price.

The online system enables collaborative and dynamic online purchase integrated within the online system and allows for a flexible processing and management of live offers. According to one embodiment, the online system further comprises means for initiating a collaborative activity between at least some of the users within the online system, said activity being linked to the element and enabling the users to directly interact with the element. According to another embodiment, the online system further comprises an update component configured to dynamically update the element in real time based on interactions with the element by at least one of the users.

In yet another embodiment, the data structure further specifies a point in time after which the items may be purchased during the specified time period.

According to another aspect, said means for providing the element are further configured to provide tags to define a target group for the offered item and said online system further comprises means for selecting the plurality of users based on the target group.

In a further embodiment, the online system further comprises an interface accessible by one of the users, configured to present the element to one or more further users of the online system. The interface may be integrated within an output interface presenting a representation of the element to the user. The interface may enable the user to select further users. After selection, the online system may process the request and may automatically present another representation of the element to each one of the selected users.

In another embodiment, the online system further comprises a feedback component configured to provide feedback on the interaction of users with the element.

According to one embodiment, the engine is further configured to adjust the price of the item as a function of a number of users interacting with the element, wherein the users are connected to each other within the online system.

According to another aspect, said interacting comprises purchasing at least one of the items by one of the users using the element and said engine is further configured to decrease the price after each purchase.

In one embodiment, said engine is further configured to decrease the price after a predetermined period of time.

According to another embodiment, the data structure further specifies the number of remaining items available for purchase and the online system further comprises means for terminating the offer in response to the number of remaining items.

In yet another embodiment, the online system is a social network. The social network may manage the users, offers, and any other online content within an integrated environment. The social network may enable users to share content and to interact with other users and content. For example, the element related to an offer is represented within the social network in the same way as any other online content or interaction, for example, by using a container or seeds, as described below. The social network enables a purchase of items that is fully integrated in the social network system using functionality, user data, other information, and resources of the social network. Hence, the approach benefits from the integrated environment of the social network and provides for improved reliability of each online purchase. Furthermore, a data structure defining an element representing an offer of one or more items for purchase within an online system according to the present disclosure comprises a first data element specifying a price of one of the items and a second data element specifying a time period for purchase of the items. The data structure also comprises an interface accessible by the online system, said interface enabling the online system to automatically present the element to a plurality of users, such that each user is enabled to interact with the element and purchase one of the items during the time period, and enabling an engine of the online system to adjust the price of the item as a function of the remaining time for purchase and an interaction of at least one of the users with the element.

The data structure and its data elements may be represented as classes or objects, lists, arrays, or any other data structure suitable to hold parameter values, pointers, or other references to data elements and/or users maintained by the online system. The interface of the data structure may be defined as a list of procedures or functions configured to access the data structure, such as a class interface. In particular, the element representing the offer may be created as a container or seed which may be stored and managed by the online system. For example, a dealer may create an offer and the online system may generate an element, represented as a live offer seed. Thereafter, the online system may target the offer towards the interested users of the online system. The seed may be stored inside of a seed cloud and may be processed together with other seeds within the online system. In particular any online content, representations of users, and any activity between users within the online system may be stored and represented as a seed. Hence, the data structure representing the offer may be fully integrated within the online system.

In yet another embodiment, the data structure further comprises a third data element specifying a point in time after which the items may be purchased during the specified time period. According to another aspect, the data structure further specifies the number of remaining items available for purchase, wherein the online system is further configured to terminate the offer in response to the number of remaining items.

Any feature of the data structure according to an embodiment of the present disclosure may be combined with features of a method or an online system according to embodiments of the present disclosure. Likewise, the data structure according to an embodiment of the present disclosure may be used, processed, and/or managed using a method or an online system according to embodiments of the present disclosure.

### BRIEF DESCRIPTION OF THE DRAWINGS

The specific features, aspects, and advantages of the present disclosure will be better understood with regard to the following description and accompanying drawings where:
FIGURE 1 shows an interface of an online system presenting a live offer according to one embodiment; and
FIGURE 2 shows an interface of an online system enabling a collaborative interaction with a live offer according to one embodiment.

### DETAILED DESCRIPTION

In the following description reference is made to the drawings which show by way of illustration various embodiments. It is to be understood that the embodiments may include changes in design and structure without departing from the scope of the claimed subject matter.

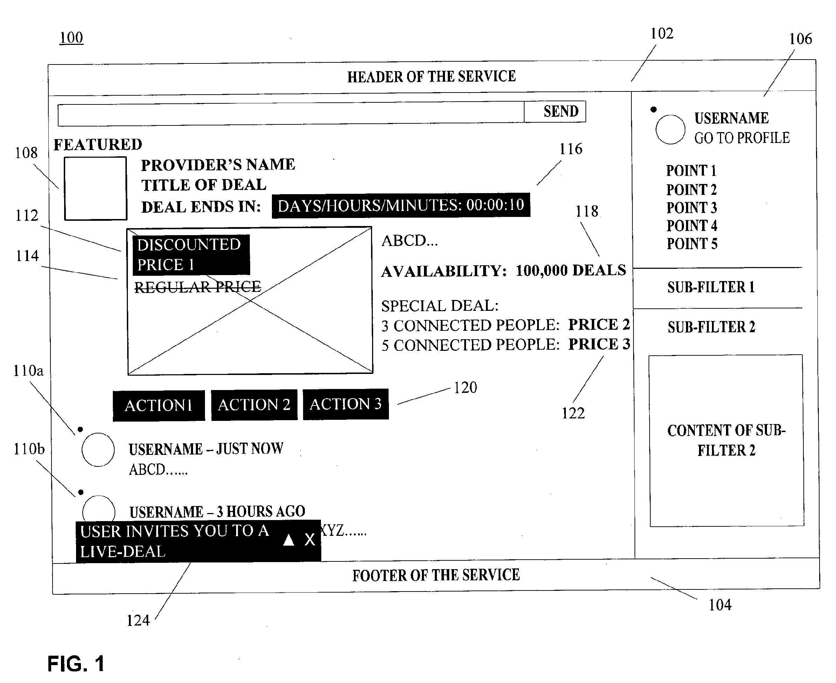

FIGURE 1 shows an interface of an online system presenting a live offer according to one embodiment, wherein the interface is presented to a user of the online system. The interface 100 is presented as a page of a social network or any other online service, system, or platform, and may be personalized to a particular user, for example, identified by a "Username." The page may comprise a header 102 and footer 104 providing information related to a service of the social network currently used by the user. Furthermore, section 106 of the page may comprise information about the user, providing an identification, such as a user name or an image of the user, and various further services for the user, such as filters for content.

The interface 100 may further show a plurality of items representing seeds. For example, one of the items may indicate an element 108 representing a live offer and other items 110a, 110b may represent online content related or linked to the user. In particular, items 110a, 110b may represent online content, such as data files or streams, as well as other users or groups of users of the social network and activities hosted by the social network. Even though element 108 and items 110a, 110b may have a different appearance within interface 100, they may be represented using the same container data structure, such as a seed, and may be therefore handled and managed in a same way by the online system. However, element 108 and items 110a, 110b may have different functionality with regard to the particular online content. The items 110a, 110b may indicate the respective user associated with the content or activity, a time stamp, and a description or comment, which may be provided by the respective user or automatically generated by the social network. Likewise, the element 108 may indicate similar data, such as a dealer or creator of the offer, a title of the offer, and a description. Element 108 may represent a live offer or deal that has been automatically presented to the user by the social network. The social network may generate the element 108 and push or forward a representation of element 108 to the user based on interests and matching tags characterizing the offer. The element 108 may represent a limited real-time deal that enables the user to take advantage of a discount 112 indicated, for example, as a discounted price with regard to a regular price 114. The discount 112 may be valid during a certain time period 116. The time period 116 may be defined as any time interval, such as a number of seconds, minutes, hours, days, weeks, years, and combinations thereof. For example, the time period 116 may define a short term, such as 00:00:10, indicating 0 days, 0 hours, and 10 minutes. In addition, the time period 116 may, for example, be set to 0 or a negative value, in order to indicate that the time period 116 should be regarded as unlimited. Furthermore, the discount 112 may only be valid if a certain number of users will purchase an item of the offer. The discount 112 could also be limited by an availability 118 of items or an amount of sold items. The interface may include several interactive elements 120 enabling the user to interact or engage with the offer. For example, the user may accept the offer, forward or recommend it to other users, and reject the offer by interacting with one of the elements 120, to mention a few.

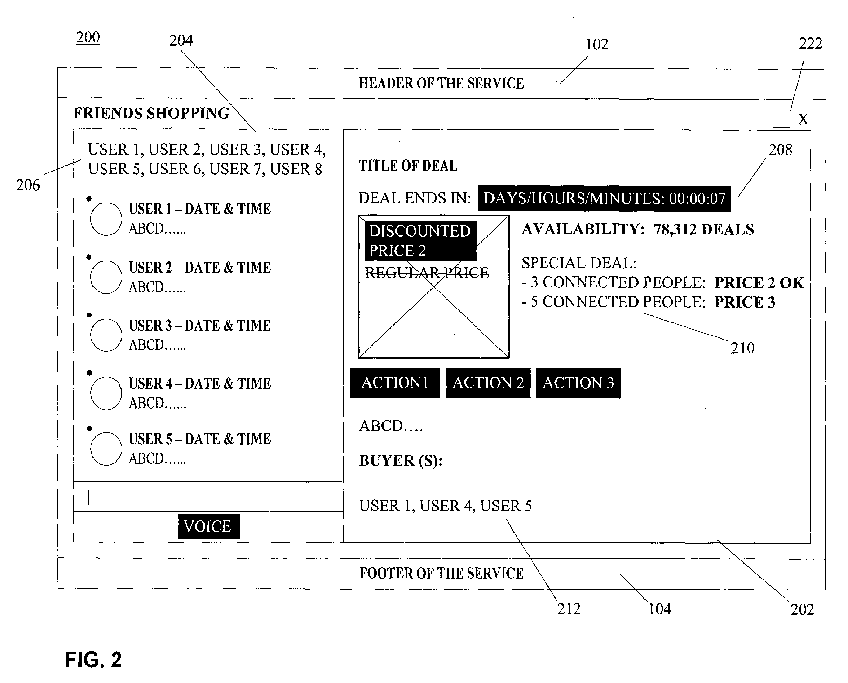

Although a representation of the element 108 could be forwarded to any user of the social network, the user forwarding the offer may benefit from an additional special price only if other users that are connected to him in the social network will purchase an item. Therefore, the element 108 could furthermore include a section 122 indicating conditions of a special price, such as the number of users buying an item and the respective price. If a user gets invited to participate in a live offer activity in order to purchase an item together with other users simultaneously, the social network may notify the user by dynamically including a further interactive element 124 in the interface 100. The user may accept the invitation by clicking or otherwise triggering the element 124. In response to this interaction, the social network may generate a collaborative environment and associate the user with the environment, as discussed below with regard to the interface of FIGURE 2.

FIGURE 2 shows an interface of an online system enabling a collaborative interaction with a live offer according to one embodiment. The interface 200 may be arranged in front of a personalized page of a user of a social network, such as the interface 100 depicted in FIGURE 1. Therefore, same or similar parts of FIGURE 2 have been designated with the same reference signs as in FIGURE 1.

After accepting an invitation to join a live offer, for example, by triggering an interactive element, such as the element 124 of FIGURE 1, the social network may provide the user with the interface 200, including a first section 202 enabling the user to engage with data of the live offer. Furthermore, the interface 200 may comprise a second section 204 enabling all users participating in the live offer to simultaneously interact with each other, for example, using a chat. Both sections 202, 204 may be represented as windows, panels, and other suitable components of an interface.

The second section 204 may show all users that have accepted the invitation, for example as a list of users 206 or icons of each participating user. Additionally, or as an alternative, the second section 204 may include a chat window, video chat windows, and a text message window. A main body of the second section 204 may be used for display of messages of other users and may also include input elements enabling the user to create and send messages to other participating users.

The first section 202 may be attached to the second section 204. Inside the first section 202, the user can see the remaining time interval 208 for purchase of items, indicating how long the offer will be available, and the current price 210 per item. The price may be affected by the amount of users of this specific group that have already bought one of the items of the offer, such as "User 1," "User 4," and "User 5," which may be displayed in real time within area 212 of the first section 202. In combination with the current price 210, the first section 202 may further indicate how many more purchasers are necessary to further improve the deal.

If a user closes the interface 200, for example, via interactive elements 222 or if the user cancels the invitation, he will be removed from the live offer. However, the live offer will not be shut down for the remaining users. If no more users participate in a live offer, the social network may decide to automatically invite further users or may notify the dealer or creator of the current state of the live offer.

The online system, such as the social network of FIGURES 1 or 2, enabling online purchase of items and the method according to embodiments of the description may be used in a variety of use cases.

According to a first exemplary use case, a game company providing an online game may offer a special virtual item on a social network according to one embodiment via a live offer. The item can be purchased for a fixed price over a period of one day or 24 hours. The users may be informed about this offer immediately after creation or in advance (for example, one day in advance). Every user of the social network connected to the online game may get a respective post informing the user about the offer. Furthermore, the recipients of the post may be selected by the social network based on connections through their interests or tags. As the live offer starts, the users can buy the item and may be required to pay immediately. Afterwards, the users may directly obtain the item. As items are bought, connected users may observe data related to the live offer via an interface of the social network, such as interface 100 or interface 200 of FIGURES 1 or 2, respectively. In particular, the interface may provide data about how many items have been sold and how many are still available. These numbers may be updated in real time. The live offer may be terminated as soon as a limited amount of items has been sold.

In a further use case, a dealer of used refurbished mobile phones may sell the phones using live offers via an online system. The dealer would like to sell several phones of one respective brand and, therefore, may offer a discount in case many users purchase such a phone. The specific live offer may be announced ahead of a starting time as defined by a time period (e.g., four days), in order to inform users of the online system and to increase the attention of potential buyers. The dealer may tag the live offer with several tag words like "mobile phone," "used," "refurbished," as well as the brand and model numbers of the devices. The online system may use the tag words to search for users of the online system that share these interests or have defined similar tags. To each user with similar or matching tags or interests the online system may push an announcement directed to the live offer in their postings list or may notify the users via other communication means of the online system.

As soon as a live offer is active during the specified time period, a user can purchase a phone. To decrease the costs, the user can promote the live offer to friends and other users of the online system. A display in the live offer may indicate how many more purchasers are needed in order to drop the price one or more steps, which have been previously defined by the dealer.

A user purchasing the phone may be required to provide a payment method, e.g., a credit card or other means of payment. The online system may also directly use data connected to the account of the user for payment. The credit card or any other means of payment may be checked for validity first. The user will buy the phone in the event he agrees to the terms, although the final price may not yet be decided on, because more users may still join the live offer and drop the final price even further. However, the price will not increase any more. When the live offer is finished, the system may use the acknowledged payment method for every purchaser to start the payment process with the final selling price.

In yet another use case, a dealer may want to offer virtual game items via live offers provided by an online system. The dealer may set the live offer to run for a time interval (e.g., five hours or any other time interval). The dealer may further specify that the price may drop by a certain amount after expiry of a time lag, for example, every 10 minutes. In addition, the amount of sold items may be limited, such that the later a user purchases an item, the less he has to pay, yet, the higher the chance will be that the stock runs out before he has actually purchased an item. Each user may view particular details of the live offer, which may be updated and displayed in real time, such as a current price, a number of sold items, and a remaining time until the next reduction of price takes place. As the price drops continuously after each time lag, the users can directly engage with the offer and decide on a suitable point in time to purchase an item.

An approach for posting future messages related to offers applicable in one embodiment may be related to individual preferences and/or interests of users of an online system, such as a social network. Further data related to an event lying in the future may be obtained and a time tag may be attributed to said event. Furthermore, at least one keyword may be attributed for said event, wherein said keyword indicates the preferences and/or interests of users that might be interested in receiving information about said event. Subsequently, a message to users of the online system may be generated, which includes at least the event data and the time tag. Furthermore, based on said individual preferences and/or interests and on said keywords, target users having individual preferences and/or interests that match said keywords may be determined and the message may be sent to the target user via the online system. The event may be automatically entered into a list of events for each target user and stored in a chronological order. The example allows a user to post a message about future events that can be presented as taking place at a specified time rather than at the time the message was sent, for example, in an ordered list of events, such as a time line or a calendar.

Another example of a method for time-based advertisement of messages related to offers applicable in one embodiment may be directed to advertising a message including data content or metadata associated with a time in the future to a plurality of users of an online system, wherein data including the message content is received at a user interface, and the message content is placed on a time line of the users interface, such that the message content is displayed on the time line in relation to its associated time and the current time.

Furthermore, according to embodiments, the offer may be automatically targeted towards interested users, for example, by selectively displaying content related to the offer to a particular user of an online system, wherein a profile for each user maintained by the online system may include data on individual preferences and/or interests of the user as well as a significance of each preference and/or interest for that user. The content related to the offer may be selectively displayed to respective users in accordance with the profile based on a matching of the preferences and/or interests which may be weighted by the significance.

A data structure of an element representing an offer according to one example may be implemented as a container or seed, which may be used to represent content data throughout an online system, a related cloud, or a server environment in a way which enables a unified management and handling of the content data. Each seed stores the respective content, such as a blog, a video file, live real-time content, other media data, a user or a group of users, or other objects. Correspondingly, all kinds of online content may be handled in the same container data structure or seed. Furthermore, each seed may store basic parameters or metadata and additional parameters or metadata. A seed may be persistent in time and may grow in size. The metadata attached to each seed may define who is allowed to interact with the seed, what the seed is allowed to do, who created the seed, and other information for handling and interacting. A respective management system may, therefore, analyze the metadata in order to determine suitable actions for the seed, which may be automatically provided to users of the online system in conjunction with the seed.

Basic parameters or metadata of a seed may include at least one of a unique ID, an identification of a user who created the seed, as well as a list of recipients that may be other seeds addressed by the seed, such as a single recipient seed or a group of recipient seeds, an indication of the type of the seed, as well as an indication of actions which are assigned to the seed, such as social or content-based actions, and combinations thereof. Further basic parameters may include an identification of an owner, which may be the current user managing the seed, link and connect permissions, a status of the seed within the online system, a future date which may define when the seed will be visible online, an expiration date, other suitable information, and combinations thereof.

A seed can be related to other seeds, such as parent, child, and neighbor seeds or other hierarchically or technically organized relationship structures. Seeds may be coupled to each other within the online system via links, connections, and/or shares. For example, if a user links to a seed, the user may establish a passive, asymmetrical link to the seed. The user will be notified about any changes and/or updates of the linked seed. A connection to a seed establishes a symmetrical connection to the seed, where both seeds, the seed representing the user connecting and the seed being connected, are aware of the connection. Furthermore, a user can define that a seed is to be shared with certain target seeds representing, for example, other individual users or a group of users. For example, a user may desire to share the content of his/her seed with a certain group of other users of the online system. In addition, seeds may be coupled across one or more online systems, servers and clouds using one or more seed servers, which may be provided by different seed-server operators.

Each seed may explicitly allow particular users to perform certain actions as defined by the basic parameters, for example, content actions directed at a use of the seed content, and social actions directed at an initiation of social interactions with the seed. Hence, an element representing an offer according to an embodiment may, for example, be created as a seed which may be stored and managed by a corresponding online system and which may enable users to interact with the element.

While some embodiments have been described in detail, it is to be understood that aspects of the disclosure can take many forms and that many modifications may be provided to the embodiments without leaving the scope of the claimed subject matter. For example, particular processing steps, data structures, interfaces, and structural characteristics of embodiments may be modified, added, and omitted without leaving the scope of the claimed subject matter. Similarly, processing steps of embodiments may be performed according to an altered order and structural elements may be arranged differently from the examples described. Accordingly, the claimed subject matter may be practiced or implemented differently from the examples described and the described features and characteristics may be practiced or implemented in any combination. The embodiments shown herein are intended to illustrate rather than to limit the invention as defined by the claims.

## Claims

1. An online system enabling purchase of items comprising:
means for providing an element representing an offer of one or more items, the element being defined as a data structure specifying a price of one of the items and a time period for purchase of the items;
means for automatically presenting the element by the online system to a plurality of users, such that each user is enabled to interact with the element and purchase at least one of the items during the time period; and
an engine configured to adjust the price of the item as a function of a remaining time for purchase and an interaction of at least one of the users with the element.

2. The online system of claim 1, further comprising an update component configured to dynamically update the element in real time based on interactions with the element by at least one of the users.

3. The online system of any of the previous claims, wherein said means for providing the element are further configured to provide tags to define a target group for the offered item and said online system further comprises means for selecting the plurality of users based on the target group.

4. The online system of any of the previous claims, further comprising an interface accessible by one of the users, configured to present the element to one or more further users of the online system.

5. The online system of any of the previous claims, wherein the engine is further configured to adjust the price of the item as a function of a number of users interacting with the element, wherein the users are connected to each other within the online system.

6. The online system of any of the previous claims, wherein said engine is further configured to decrease the price after a predetermined period of time.

7. The online system of any of the previous claims, wherein the data structure further specifies the number of remaining items available for purchase and the online system further comprises means for terminating the offer in response to the number of remaining items.

8. The online system of any of the previous claims being a social network.

9. A method for enabling purchase of items within an online system, comprising:
providing an element representing an offer of one or more items, the element specifying a price of one of the items and a time period for purchase of the items;
automatically presenting the element by the online system to a plurality of users, such that each user is enabled to interact with the element and purchase at least one of the items during the time period; and
adjusting the price of the item as a function of a remaining time for purchase and an interaction of at least one of the users with the element.

10. The method of claim 1, further comprising one or more of the following steps:
initiating a collaborative activity between at least some of the users within the online system, said activity being linked to the element and enabling the users to directly interact with the element;
dynamically updating the element by the online system in real time based on interactions with the element by at least one of the users;
providing tags to define a target group for the offered item and selecting the plurality of users based on the target group;
providing feedback on the interaction of users with the element;
adjusting the price of the item is further adjust as a function of a number of users interacting with the element, wherein the users are connected to each other within the online system.

11. The method of claim 9 or 10, wherein said interacting comprises receiving an indication of a purchase of at least one of the items by one of the users using the element and said adjusting includes decreasing the price after each purchase.

12. The method of any of the claims 9 to 11, wherein said adjusting includes decreasing the price after a predetermined period of time.

13. The method of any of the claims 9 to 12, wherein the final selling price of a purchased item corresponds to the price valid at the time of purchase of the item or to the price valid at the end of the time period.

14. The method of any of claims 9 to 13, wherein the element further specifies the number of remaining items available for purchase and the method further comprises terminating the offer in response to the number of remaining items, and/or the element further specifies a point in time after which the items may be purchased during the specified time period.

15. A computer-readable medium having instructions stored thereon, wherein said instructions, when executed on a computing device, cause said computing device to automatically perform a method for enabling purchase of items of any of the claims 9 to 14.
